# FASCICULE DE BREVET EUROPEEN

(11) **EP 2 656 531 B1**
(45) Date de publication et mention de la délivrance du brevet: **01.05.2019**
(21) Numéro de dépôt: 11817397.0
(22) Date de dépôt: 19.12.2011
(51) Int. Cl.: H04L 1/20, H04B 3/46

(54) **MESURE DE BRUIT IMPULSIF PAR DETECTION SPECTRALE**
IMPULSRAUSCHMESSUNG MITTELS SPEKTRALER DETEKTION
IMPULSE NOISE MEASUREMENT BY SPECTRAL DETECTION

(30) Priorité: 20.12.2010 FR 1060820
(43) Date de publication de la demande: 30.10.2013
(73) Titulaire: Orange, 75015 Paris (FR)
(72) Inventeur: TARAFI, Rabah, F-22300 Lannion (FR); CARIO, Alain, F-22300 Lannion (FR)
(86) Numéro de dépôt international: PCT/FR2011/053059
(87) Numéro de publication internationale: WO 2012/085431

(56) Documents cités:
- EP-A2- 1 178 642
- EP-A2- 1 359 696
- US-A1- 2005 213 692
- US-A1- 2010 017 206

## Description

Le domaine de l'invention est celui des télécommunications numériques. Les systèmes de communication peuvent être soumis à de fortes perturbations électromagnétiques. Les bruits générés par les perturbations électromagnétiques peuvent être classés en deux grandes catégories : les bruits stationnaires et les bruits impulsifs.

Pour chacune de ces catégories de perturbations, le procédé de mesure, rigoureusement différent, est adapté au caractère stationnaire ou temporaire de la perturbation électromagnétique.

Ainsi, on utilise généralement un analyseur de spectre à balayage pour l'étude des bruits stationnaires et un oscilloscope numérique pour l'étude des bruits impulsifs.

Pour mesurer un bruit stationnaire, le fonctionnement classique d'un analyseur de spectre se base sur un balayage dans le temps de l'ensemble du spectre à surveiller.

Sur une échelle de temps assez grande, typiquement de l'ordre de la seconde, l'analyseur de spectre balaye les fréquences pour obtenir la densité spectrale de puissance du bruit sur l'ensemble du spectre.

Ce principe de fonctionnement permet à l'analyseur de spectre d'avoir une sensibilité très forte et un bruit interne très faible. Ces deux propriétés le rendent très adapté à la mesure de perturbations stationnaires sur des lignes téléphoniques avec des niveaux parfois très faibles.

D'autre part, un bruit impulsif est caractérisé par une amplitude qui peut être élevée mais surtout une durée qui est brève. Sa durée peut être par exemple de quelques microsecondes pour des bruits impulsifs isolés.

La demande de brevet européenne EP 1 359 686 A2 décrit un système d'adaptation dynamique à des détériorations d'un canal utilisant un analyseur de spectre, sur la base d'une métrique de qualité de performance de ce canal.

L'analyseur de spectre à balayage n'est pas adapté dès que l'on veut observer des phénomènes variant dans le temps. En effet, pour connaitre la densité spectrale de puissance globale du bruit, il est nécessaire que celui-ci ne varie pas pendant le temps du balayage de l'analyseur. L'analyse d'un bruit impulsif, qui est un phénomène particulièrement bref, sera donc impossible : la durée d'une impulsion est très largement inférieure au temps de balayage (quelques µs contre plusieurs ms).

Par ailleurs, l'oscilloscope numérique est un outil de mesure des phénomènes temporels qui permet une mesure des variations temporelles du signal observé, en offrant diverses possibilités pour le déclenchement et la mémorisation des signaux. C'est pourquoi on l'utilise pour mesurer des bruits impulsifs.

Pour cela, on définit un seuil de déclenchement de mémorisation des signaux. Lorsque l'amplitude du signal dépasse ce seuil, le signal est mémorisé puis traité. Les bruits sont mesurés en temporel. Le traitement pour connaître leur durée et leur amplitude est donc immédiat.

Cependant, le seuil doit nécessairement être au-dessus de l'amplitude du bruit stationnaire. Cela implique que les bruits impulsifs dont l'amplitude est inférieure à celle du bruit stationnaire ne peuvent pas être mesurés par cette méthode.

Les bruits impulsifs sont gênants pour les transmissions de type xDSL ou PLT (d'après l'anglais Power Line Transmission) par exemple, c'est-à-dire pour les transmissions pour lesquelles les caractéristiques fréquentielles du signal transmis doivent être connues et maitrisées pour une bonne réception du signal.

La présente invention a pour but de résoudre les inconvénients de la technique antérieure.

A cette fin, l'invention propose un procédé de mesure de bruit impulsif dans un signal, caractérisé en ce qu'il comporte les étapes de :
- mesure d'au moins un premier signal ;
- conversion du premier signal dans le domaine fréquentiel ;
- définition d'un seuil de déclenchement variable en fréquence, en fonction de caractéristiques stationnaires du premier signal ;
- mesure d'un deuxième signal ;
- conversion du deuxième signal dans le domaine fréquentiel ;
- mémorisation du deuxième signal dans le domaine temporel lorsque le deuxième signal atteint ou dépasse le seuil de déclenchement ; et
- filtrage passe-haut du signal mémorisé.

Grâce à l'invention, un bruit impulsif peut être mesuré dans un signal comportant un bruit stationnaire, même si le bruit impulsif a une amplitude inférieure à celle du bruit stationnaire. La mesure de tels bruits impulsifs est particulièrement importante pour des transmissions pour lesquelles les caractéristiques fréquentielles du signal transmis doivent être connues et maitrisées pour garantir une bonne réception du signal. Il est à noter que le seuil de déclenchement est défini dans le domaine fréquentiel.

Selon une caractéristique préférée, la conversion du signal dans le domaine fréquentiel est réalisée par une transformée de Fourier. On peut notamment utiliser la transformée de Fourier rapide.

Selon une caractéristique préférée, la conversion du signal dans le domaine fréquentiel est réalisée dans un analyseur de spectre temps réel. L'analyseur de spectre temps réel est bien adapté pour convertir un signal dans le domaine fréquentiel.

Selon une caractéristique préférée, le seuil de déclenchement est défini à partir d'une mesure de bruit stationnaire dans le premier signal. Ainsi, le seuil de déclenchement est adapté au signal traité. Tant que le signal traité ne comporte que du bruit stationnaire, le seuil de déclenchement n'est pas dépassé et on ne cherche pas de bruit impulsif. Au contraire, dès que le seuil de déclenchement est atteint, cela indique la présence d'un bruit impulsif et le traitement se poursuit pour mesurer ce bruit impulsif.

Selon une caractéristique préférée, le seuil de déclenchement est un masque situé au-dessus du premier signal. Ainsi le déclenchement est réalisé de manière relativement simple, en comparant le deuxième signal avec le masque, dans le domaine fréquentiel.

Selon une caractéristique préférée, une pluralité de premiers signaux est mesurée et convertie dans le domaine fréquentiel, le seuil de déclenchement variable en fréquence étant alors défini en fonction de la moyenne de la pluralité de premiers signaux convertis.

L'invention concerne aussi un dispositif de mesure de bruit impulsif dans un signal, caractérisé en ce qu'il comporte :
- des moyens de conversion (AS) du signal dans le domaine fréquentiel, les moyens de conversion étant aptes à mesurer au moins un premier signal et un deuxième signal ;
- des moyens de définition d'un seuil de déclenchement variable en fréquence, en fonction de caractéristiques stationnaires du premier signal ;
- des moyens de mémorisation du deuxième signal dans le domaine temporel lorsque le seuil de déclenchement est atteint ou dépassé ; et
- des moyens de filtrage passe-haut du signal mémorisé.

Le dispositif apporte des avantages analogues à ceux du procédé précédemment présenté.

Dans un mode particulier de réalisation, les différentes étapes des procédés selon l'invention sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tels que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture d'un mode de réalisation décrit en référence aux figures dans lesquelles :
- la figure 1 représente un mode de réalisation de procédé de mesure selon l'invention,
- la figure 2 représente un exemple de signal à traiter selon l'invention, dans le domaine temporel,
- la figure 3 représente le même exemple de signal à traiter selon l'invention, dans le domaine fréquentiel,
- la figure 4 représente le signal en cours de traitement selon l'invention, dans le domaine fréquentiel,
- la figure 5 représente un mode de réalisation d'une étape du procédé selon l'invention,
- la figure 6 représente le signal de bruit impulsif déterminé selon l'invention, et
- la figure 7 représente un mode de réalisation de dispositif de mesure selon l'invention.

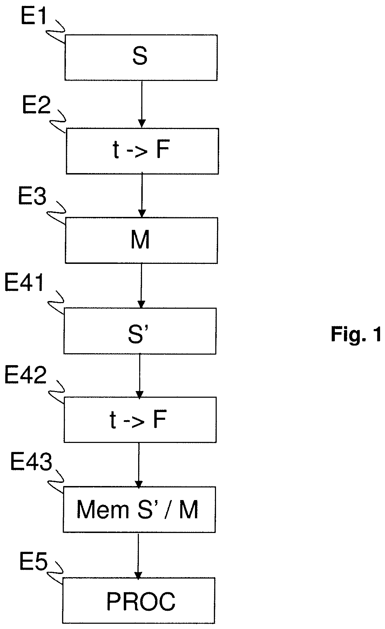

Selon un mode de réalisation de l'invention représenté à la **figure 1****,** le procédé de mesure de bruit impulsif dans un signal S comporte des étapes E1 à E5.

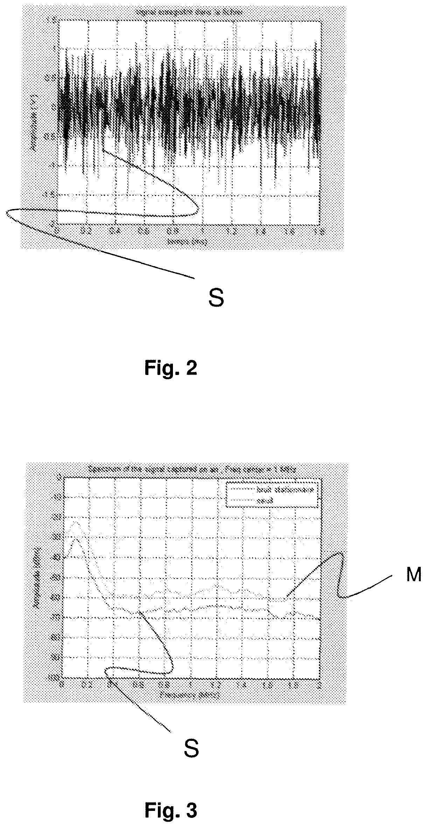

L'étape E1 est la mesure d'au moins un premier signal S par un analyseur de spectre temps réel. Ce premier signal S est représenté sous forme temporelle à la **figure 2****.** Il comporte du bruit stationnaire et est susceptible de comporter du bruit impulsif. Les caractéristiques stationnaires du signal sont connues. En particulier, le premier signal S de la figure 2 ne comporte que du bruit stationnaire dans un mode de réalisation préféré.

Afin d'illustrer l'invention, un seul premier signal S est indiqué comme étant mesuré à ce stade, mais une pluralité de premier signaux S peuvent aussi être mesurés, par exemple en effectuant plusieurs passages successifs au moyen de l'analyseur de spectre temps réel.

L'étape suivante E2 est la conversion du premier signal S dans le domaine fréquentiel, par exemple par application d'une transformée de fourrier rapide FFT. La **figure 3** représente le premier signal S après conversion dans le domaine fréquentiel. On voit que l'amplitude du premier signal S est plus élevée pour les fréquences faibles que pour les fréquences plus élevées.

Lorsque plusieurs premiers signaux S ont été mesurés, ils sont tous convertis dans le domaine fréquentiel lors de cette étape.

L'étape suivante E3 est la définition d'un seuil de déclenchement, dans le domaine fréquentiel, en fonction de caractéristiques stationnaires du signal. En particulier, ce seuil de déclenchement est variable en fréquence afin de tenir compte des caractéristiques stationnaires du signal.

Pour cela, on définit un masque fréquentiel M dont l'amplitude est située au dessus de celle du premier signal S.

Lorsque plusieurs premiers signaux S ont été mesurés et convertis dans le domaine fréquentiel, ce seuil de déclenchement variable en fréquence est défini en fonction de ces premiers signaux S, par exemple en fonction de la moyenne de ces premiers signaux S. Ainsi, le masque fréquentiel M susmentionné peut être défini avec une amplitude située au dessus de celle de la moyenne de ces premiers signaux S.

On suppose maintenant qu'un bruit impulsif est présent dans un deuxième signal S' à analyser. Ce deuxième signal S' à analyser comporte ainsi du bruit stationnaire, analogue à celui du premier signal S, et du bruit impulsif. Le bruit impulsif a une amplitude plus faible que celle du bruit stationnaire, de sorte que la représentation temporelle du deuxième signal S' est analogue à celle du premier signal S (figure 2). Le bruit impulsif n'est pas directement détectable dans le domaine temporel et est en quelque sorte caché dans le bruit stationnaire.

Dans ce cas, les étapes E41 à E43 sont mises en oeuvre :
- le deuxième signal S' est mesuré (étape E41) par un analyseur de spectre temps réel, similairement à l'étape E1 susmentionnée.
- ce deuxième signal S' est ensuite converti dans le domaine fréquentiel (étape E42), similairement à l'étape E2 susmentionnée, par exemple par application d'une transformée de Fourrier rapide FFT.
- enfin, le deuxième signal S' est mémorisé dès que le niveau de bruit mesuré atteint ou dépasse le masque fréquentiel M (étape E43), ce qui aboutit à l'obtention d'un signal mémorisé S" présentant des composantes fréquentielles seulement sur certaines partie du spectre. Le déclenchement de la mémorisation est donc basé sur une analyse fréquentielle du deuxième signal S' traité. Le signal mémorisé S" est mémorisé dans le domaine temporel.

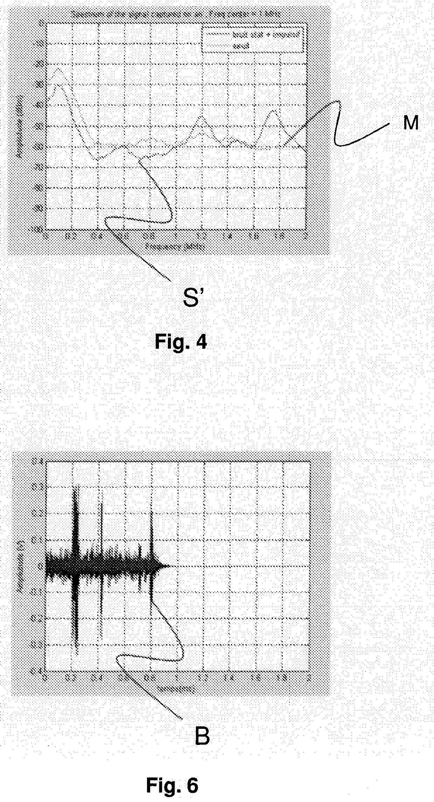

La **figure 4** est un exemple de représentation spectrale du signal mémorisé S". Dans cet exemple, le deuxième signal S' comporte un bruit stationnaire, sensiblement identique à celui du premier signal S représenté aux figures 2 et 3, et un bruit impulsif qui se traduit par deux pics. Le signal S' est sensiblement identique au signal S dans les basses fréquences, et il s'en distingue par les deux pics qui sont situés dans les hautes fréquences. L'amplitude des deux pics est inférieure à l'amplitude maximale du signal S' mais est supérieure à celle du masque M aux fréquences portant ces pics, il y a donc détection spectrale de la présence de bruit impulsif au moyen du signal mémorisé S" correspondant à ces deux pics.

L'étape suivante E5 est le traitement du signal mémorisé S" après détection spectrale de la présence du bruit impulsif. Le signal mémorisé S" est un signal temporel, dont la durée est 2 ms. Il comporte cinq trames d'acquisition de 1024 points chacune. Un analyseur de spectre temps réel travaille typiquement sur des trames de 1024 points, mais bien entendu, l'invention n'est pas limitée à ce mode de réalisation.

Le traitement comporte des sous-étapes E51 à E55 :
- A l'étape E51, on considère une trame de 1024 points et la transformée de Fourier rapide FFT est calculée. Le résultat est un signal dans le domaine fréquentiel.
- L'étape suivante E52 est un filtrage passe-haut du signal obtenu à l'étape précédente. Le filtrage passe-haut a pour but d'éliminer la partie basse du spectre, pour laquelle le signal a une amplitude supérieure à celle du reste du spectre. Cette partie basse du spectre masque les bruits impulsifs.

Le résultat est un signal filtré Sf, débarrassé de ses basses fréquences.
- L'étape suivante E53 est le calcul de la transformée de Fourier inverse du signal précédemment filtré, pour obtenir une représentation temporelle du signal filtré.
- L'étape suivante E54 est la détermination du maximum énergétique Eₘₐₓ. A la première itération, le maximum est la norme du vecteur résultat de la transformée de Fourier inverse. Aux itérations suivantes, le maximum est la plus grande valeur entre la norme du vecteur résultat de la transformée de Fourier inverse et le maximum déterminé à l'itération précédente. La détermination du maximum énergétique Eₘₐₓ permet de déterminer l'amplitude du signal à un instant t et donc de reconstituer l'enveloppe temporelle du signal représentatif du bruit impulsif.
- L'étape suivante E55 est un passage à la trame suivante dans le signal mémorisé, tant que toutes les trames n'ont pas été traitées. Tant qu'il reste au moins une trame à traiter, l'étape E55 est suivie de l'étape E51.

Lorsque toutes les trames ont été traitées, le traitement du signal est terminé.

Le bruit impulsif est alors détecté et reconstitué. La **figure 6** représente un exemple de bruit impulsif B extrait du signal S' qui comportait un bruit stationnaire et un bruit impulsif d'amplitude inférieure à celle du bruit stationnaire.

En pratique, des bruits impulsifs sont générés par des appareils électrodomestiques, par exemple dans une habitation. Ces bruits impulsifs sont ensuite véhiculés par les câbles électriques et peuvent se coupler sur les câbles téléphoniques.

Les bruits impulsifs perturbant alors les transmissions de type xDSL ou PLT. Par exemple, lors de la réception d'un signal de télévision, la QoS (qualité de service) peut être dégradée, ce qui se traduit par des phénomènes de pixellisation de l'image ou encore de « gel » de l'image.

La connaissance et la caractérisation des bruits impulsifs susceptibles de perturber des signaux utiles permettent de bien dimensionner les codes correcteurs d'erreur. Par exemple, le délai d'entrelacement et la marge de bruit cible pour l'ADSL (aussi bien dans le DSLAM que dans le modem client), ou encore la matrice du FEC COP3 pour un flux RTP, peuvent être déterminés en fonction des bruits impulsifs.

De manière plus générale, la connaissance et la caractérisation des bruits impulsifs susceptibles de perturber des signaux utiles permettent de réaliser des tests sur des matériels de télécommunications, afin de sélectionner ceux qui ont le meilleur comportement lorsqu'ils sont soumis à des perturbations représentatives de la réalité, et non seulement à des perturbations qui suivent des modèles théoriques.

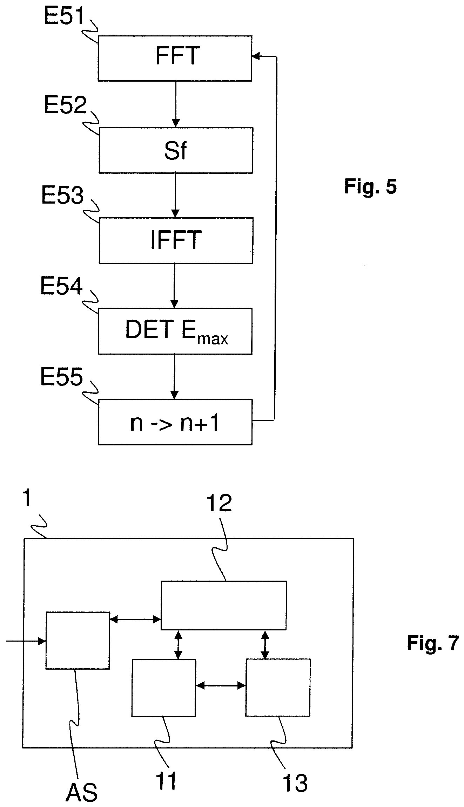

En référence à la **figure 7****,** un dispositif 1 de mesure de bruit impulsif dans un signal comporte :
- des moyens de conversion du signal dans le domaine fréquentiel,
- des moyens de définition d'un seuil de déclenchement variable en fréquence, en fonction de caractéristiques stationnaires du signal,
- des moyens de mémorisation du signal lorsque le seuil est atteint,
- des moyens de filtrage passe-haut du signal mémorisé.

Le dispositif 1 met en oeuvre les étapes précédemment décrite. Pour cela, il comporte un analyseur de spectre temps réel AS couplé avec un équipement de calcul, ayant typiquement la structure d'un ordinateur. L'analyseur de spectre temps réel AS reçoit le signal à traiter et réalise les étapes de conversion, de définition d'un seuil de déclenchement et de mémorisation du signal. Le traitement ultérieur est réalisé par l'équipement de calcul.

Un tel équipement comprend une mémoire 11 comprenant une mémoire tampon, une unité de traitement 12, équipée par exemple d'un microprocesseur, et pilotée par le programme d'ordinateur 13, mettant en oeuvre le procédé selon l'invention.

A l'initialisation, les instructions de code du programme d'ordinateur 13 sont par exemple chargées dans une mémoire RAM avant d'être exécutées par le processeur de l'unité de traitement 12. L'unité de traitement 12 reçoit en entrée le signal mémorisé par l'analyseur de spectre temps réel après déclenchement. Le microprocesseur de l'unité de traitement 12 met en oeuvre les étapes du procédé décrit précédemment, selon les instructions du programme d'ordinateur 13, pour mesurer le bruit impulsif dans le signal.

## Revendications

1. Procédé de mesure de bruit impulsif dans un signal, **caractérisé en ce qu'**il comporte les étapes de :
- mesure (E1) d'au moins un premier signal (S) ;
- conversion (E2) du premier signal dans le domaine fréquentiel,
- définition (E3) dans le domaine fréquentiel d'un seuil de déclenchement (M) variable en fréquence, en fonction de caractéristiques stationnaires du premier signal,
- mesure d'un deuxième signal (S') ;
- conversion du deuxième signal dans le domaine fréquentiel,
- obtention d'un troisième signal (S") à partir de la mémorisation (E4) du deuxième signal dans le domaine temporel lorsque l'amplitude dudit deuxième signal dans le domaine fréquentiel atteint ou dépasse le seuil de déclenchement ; et
- filtrage (E5) passe-haut du troisième signal (S").

2. Procédé de mesure de bruit impulsif dans un signal selon la revendication 1, **caractérisé en ce que** la conversion (E2) du signal dans le domaine fréquentiel est réalisée par une transformée de Fourier.

3. Procédé de mesure de bruit impulsif dans un signal selon la revendication 2, **caractérisé en ce que** la conversion (E2) du signal dans le domaine fréquentiel est réalisée dans un analyseur de spectre temps réel.

4. Procédé de mesure de bruit impulsif dans un signal selon l'une quelconque des revendications 1 à 3, **caractérisé en ce que** le seuil de déclenchement (M) est défini à partir d'une mesure de bruit stationnaire dans le premier signal.

5. Procédé de mesure de bruit impulsif dans un signal selon la revendication 4, **caractérisé en ce que** le seuil de déclenchement (M) est un masque situé au dessus du premier signal (S).

6. Procédé de mesure de bruit impulsif dans un signal selon l'une des revendications 1 à 5, dans lequel une pluralité de premiers signaux est mesurée (E1) et convertie (E2) dans le domaine fréquentiel, le seuil de déclenchement variable en fréquence étant défini en fonction de la moyenne de la pluralité de premiers signaux convertis.

7. Dispositif (1) de mesure de bruit impulsif dans un signal, **caractérisé en ce qu'**il comporte :
- des moyens de conversion (AS) du signal dans le domaine fréquentiel, les moyens de conversion étant aptes à mesurer au moins un premier signal (S) et un deuxième signal (S') ;
- des moyens de définition (12) dans le domaine fréquentiel d'un seuil de déclenchement (M) variable en fréquence, en fonction de caractéristiques stationnaires du premier signal (S) ;
- des moyens de mémorisation (11) du deuxième signal (S') dans le domaine temporel lorsque le seuil de déclenchement est atteint ou dépassé par l'amplitude dudit deuxième signal dans le domaine fréquentiel ; et
- des moyens de filtrage passe-haut du signal mémorisé.

8. Programme d'ordinateur comportant des instructions pour l'exécution des étapes du procédé selon l'une quelconque des revendications 1 à 6 lorsque ledit programme est exécuté par un ordinateur.

9. Support d'enregistrement lisible par un ordinateur sur lequel est enregistré un programme d'ordinateur comprenant des instructions pour l'exécution des étapes du procédé selon l'une quelconque des revendications 1 à 6.

## Patentansprüche

1. Verfahren zum Messen von Impulsrauschen in einem Signal, **dadurch gekennzeichnet, dass** es die folgenden Schritte enthält zum:
- Messen (E1) von mindestens einem ersten Signal (S);
- Umwandeln (E2) des ersten Signals in den Frequenzbereich;
- Definieren (E3) einer frequenzvariablen Auslöseschwelle (M) im Frequenzbereich in Abhängigkeit von stationären Merkmalen des ersten Signals;
- Messen eines zweiten Signals (S');
- Umwandeln des zweiten Signals in den Frequenzbereich;
- Erhalten eines dritten Signals (S") ausgehend von dem Speichern (E4) des zweiten Signals im Zeitbereich, wenn die Amplitude des zweiten Signals im Frequenzbereich die Auslöseschwelle erreicht oder übersteigt; und
- Hochpassfiltern (E5) des dritten Signals (S").

2. Verfahren zum Messen von Impulsrauschen in einem Signal nach Anspruch 1, **dadurch gekennzeichnet, dass** das Umwandeln (E2) des Signals in den Frequenzbereich durch eine Fourier-Transformation durchgeführt wird.

3. Verfahren zum Messen von Impulsrauschen in einem Signal nach Anspruch 2, **dadurch gekennzeichnet, dass** das Umwandeln (E2) des Signals in den Frequenzbereich in einem Echtzeit-Spektrumanalysator durchgeführt wird.

4. Verfahren zum Messen von Impulsrauschen in einem Signal nach einem der Ansprüche 1 bis 3, **dadurch gekennzeichnet, dass** die Auslöseschwelle (M) ausgehend von einer stationären Rauschmessung im ersten Signal definiert wird.

5. Verfahren zum Messen von Impulsrauschen in einem Signal nach Anspruch 4, **dadurch gekennzeichnet, dass** die Auslöseschwelle (M) eine Maske über dem ersten Signal (S) ist.

6. Verfahren zum Messen von Impulsrauschen in einem Signal nach einem der Ansprüche 1 bis 5, in dem eine Vielzahl von ersten Signalen gemessen (E1) und in den Frequenzbereich umgewandelt (E2) wird, wobei die frequenzvariable Auslöseschwelle definiert ist in Abhängigkeit vom Mittelwert der Vielzahl der umgewandelten ersten Signale.

7. Vorrichtung (1) zum Messen von Impulsrauschen in einem Signal, **dadurch gekennzeichnet, dass** sie Folgendes umfasst:
- Mittel zum Umwandeln (AS) des Signals in den Frequenzbereich, wobei die Mittel zum Umwandeln mindestens ein erstes Signal (S) und ein zweites Signal (S') messen können;
- Mittel zum Definieren (12) einer frequenzvariablen Auslöseschwelle (M) im Frequenzbereich in Abhängigkeit von stationären Merkmalen des ersten Signals (S);
- Mittel zum Speichern (11) des zweiten Signals (S') im Zeitbereich, wenn die Amplitude des zweiten Signals im Frequenzbereich die Auslöseschwelle erreicht oder übersteigt; und
- Mittel zum Hochpassfiltern des gespeicherten Signals.

8. Computerprogramm mit Anweisungen zum Ausführen der Schritte des Verfahrens nach einem der Ansprüche 1 bis 6, wenn das Programm von einem Computer ausgeführt wird.

9. Computerlesbares Speichermedium, auf dem ein Computerprogramm gespeichert ist, das Anweisungen zum Ausführen der Schritte des Verfahrens nach einem der Ansprüche 1 bis 6 umfasst.

## Claims

1. Method for measuring impulse noise in a signal, **characterized in that** it comprises the steps of:
- measuring (E1) at least one first signal (S);
- converting (E2) the first signal into the frequency domain,
- defining (E3), in the frequency domain, a variable-frequency trigger threshold (M) on the basis of static characteristics of the first signal,
- measuring a second signal (S');
- converting the second signal into the frequency domain,
- obtaining a third signal (S") on the basis of storing (E4) the second signal in the temporal domain when the amplitude of said second signal in the frequency domain reaches or exceeds the trigger threshold; and
- high-pass filtering (E5) the third signal (S").

2. Method for measuring impulse noise in a signal according to Claim 1, **characterized in that** the conversion (E2) of the signal into the frequency domain is performed by a Fourier transform.

3. Method for measuring impulse noise in a signal according to Claim 2, **characterized in that** the conversion (E2) of the signal into the frequency domain is performed in a real-time spectrum analyser.

4. Method for measuring impulse noise in a signal according to any one of Claims 1 to 3, **characterized in that** the trigger threshold (M) is defined on the basis of a measurement of static noise in the first signal.

5. Method for measuring impulse noise in a signal according to Claim 4, **characterized in that** the trigger threshold (M) is a mask situated above the first signal (S).

6. Method for measuring impulse noise in a signal according to one of Claims 1 to 5, wherein a plurality of first signals is measured (E1) and converted (E2) into the frequency domain, the variable-frequency trigger threshold being defined on the basis of the average of the plurality of converted first signals.

7. Device (1) for measuring impulse noise in a signal, **characterized in that** it includes:
- means (AS) for converting the signal into the frequency domain, the conversion means being able to measure at least a first signal (S) and a second signal (S');
- means (12) for defining, in the frequency domain, a variable-frequency trigger threshold (M) on the basis of static characteristics of the first signal (S);
- means (11) for storing the second signal (S') in the temporal domain when the trigger threshold is reached or exceeded by the amplitude of said second signal in the frequency domain; and
- means for high-pass filtering the stored signal.

8. Computer program including instructions for executing the steps of the method according to any one of Claims 1 to 6 when said program is executed by a computer.

9. Computer-readable recording medium on which there is recorded a computer program comprising instructions for executing the steps of the method according to any one of Claims 1 to 6.
